(19) **Europäisches Patentamt / European Patent Office / Office européen des brevets**

(11) **EP 4 321 489 B1**

(12) **EUROPEAN PATENT SPECIFICATION**

(45) Date of publication and mention
of the grant of the patent:
**05.03.2025 Bulletin 2025/10**

(21) Application number: **23184561.1**

(22) Date of filing: **10.07.2023**

(51) International Patent Classification (IPC):
**C02F 1/56** *(2023.01)* **C08F 265/10** *(2006.01)*
**D21H 17/45** *(2006.01)* **D21H 21/10** *(2006.01)*

(52) Cooperative Patent Classification (CPC):
(C-Sets available)
**C08F 265/10; C02F 1/56; D21H 17/37;
D21H 17/375; D21H 21/10; D21H 21/18** (Cont.)

(54) **CATIONIC POLYACRYLAMIDES WITH MICRO-BLOCK STRUCTURE**

**KATIONISCHE POLYACRYLAMIDE MIT MIKROBLOCKSTRUKTUR**

**POLYACRYLAMIDES CATIONIQUES À STRUCTURE MICRO-BLOC**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.07.2022 CN 202210882881**

(43) Date of publication of application:
**14.02.2024 Bulletin 2024/07**

(73) Proprietor: **SNF Group**
**42160 Andrézieux-Bouthéon (FR)**

(72) Inventors:
• **FAVERO, Cédrick**
**42160 ANDRÉZIEUX-BOUTHÉON (FR)**

• **KIEFFER, Johann**
**42160 ANDRÉZIEUX-BOUTHÉON (FR)**
• **BOISSE, Nicolas**
**TAIXING CITY 225400 (CN)**
• **LING, Jing**
**TAIXING CITY 225400 (CN)**

(74) Representative: **Cabinet Laurent & Charras**
**Le Contemporain**
**50 Chemin de la Bruyère**
**69574 Dardilly Cedex (FR)**

(56) References cited:
**WO-A1-2013/138156 WO-A1-2022/053752**

(52) Cooperative Patent Classification (CPC): (Cont.)

C-Sets
**C08F 220/585, C08F 228/02;
C08F 265/10, C08F 220/56, C08F 220/34**

**Description**

**FIELD OF THE INVENTION**

The present invention, as defined in the appending claims, relates to cationic polyacrylamides structured in the form of micro-blocks. More specifically, these cationic polyacrylamides are obtained by polymerization of cationic monomers in the presence of a homopolymer of 2-acrylamido-2-methylpropane sulfonate in salified form, with a weight average molecular weight of between 5,000 and 100,000 daltons, said homopolymer being obtained from 2-acrylamido-2-methylpropane sulfonate in salified form containing impurities.

**PRIOR STATE OF THE ART**

Cationic polyacrylamides (CPAM), synthesized with at least one cationic monomer and one nonionic monomer, are commonly used as flocculants (sludge treatment, production of drinking water) but also as dry resistance agent in the manufacturing processes of paper or cardboard.

The most common cationic monomers to obtain CPAMs are dimethyldiallylammonium chloride (DADMAC), (acryloxyethyl)trimethylammonium chloride (ADAM-MC), and (methacryloyloxyethyl)trimethylammonium chloride (MADAM-MC). CPAMs, which are mainly prepared by radical polymerization, have a significant drawback: the cationic units, which disperse randomly in the polymer chain, are not completely available. Moreover, it is known that the cationic monomers mentioned have different reactivity ratios from acrylamide. Consequently, the distribution of cationic monomers in the polymer chain is not constant. In other words, a drift in monomeric composition sets in, the CPAM comprising chains rich and chains poor in cationic monomers. Consequently, the effectiveness of CPAMs for flocculation is reduced.

In order to avoid the random distribution of the cationic monomeric units, specific molecules (templates) may be added to the CPAM polymerization feed. These molecules interact with the cationic monomer of the polymer through electrostatic forces, van der Waals forces and/or hydrogen bonds, and modify the polymerization process, the reactivity ratio of the monomer and/or the sequence distribution of the polymer molecule to finally improve the application performance of the polymer thus obtained. Therefore, if an anionic polymer (APAM) is used as a template and is added to the CPAM polymerization feed, the cationic monomer will be adsorbed and directionally distributed along the polymer chain under the force of the electric field. A CPAM comprising micro-blocks of cationic monomeric units is thus obtained.

The anionic polymer (APAM), used as a template for the synthesis of the CPAMs described above, may be an acrylate homopolymer in salified form.

However, the homopolymer of 2-acrylamido-2-methylpropane sulfonate in salified form remains the best template because the pKa delta between the cationic polymer and this homopolymer is greater than the pKa delta between the cationic polymer and the homopolymer of acrylate in salified form. WO2013/138156 A1 discloses a copolymer, for oil-drilling applications, obtained by copolymerization of acrylamide, 2-acrylamido-2-methylpropane sulfinic acid (AMPS) and a cationic monomer in the presence of a homopolymer of AMPS. WO2022/053752A1 discloses polymers obtained by polymerization of AMPS that contains from 250 to 20,000 ppm by weight of 2-methyl-2-propenyl-sulfonic acid (MPS), in acid and/or salified form.

**DISCLOSURE OF THE INVENTION**

The applicant surprisingly discovered that the micro-block structure of a water-soluble cationic copolymer **P2** is effectively controlled (size and distribution) when it is polymerized in the presence of a homopolymer **P1** of 2-acrylamido-2-methylpropane sulphonic acid in salified form, of weight average molecular weight between 5,000 and 100,000 daltons, prepared from 2-acrylamido-2-methylpropane sulphonic acid in salified form containing impurities.

The cationic polymer **P2** thus obtained has improved application properties when it is used as a dry strength agent in a papermaking process or as a flocculant for the treatment of waste water.

The homopolymer **P1** used as a template for obtaining the cationic polymer **P2** is obtained from 2-acrylamido-2-methylpropane sulfonic acid in salified form. This salified form is formed from 2-acrylamido-2-methylpropane sulfonic acid. This anionic monomer is not purified at the end of its manufacturing process: it is generally obtained by Ritter reaction or it comes from a residue or from waste or from a purge from a process for the purification of 2-acrylamido-2-methylpropane sulfonic acid.

The polymerization of this 2-acrylamido-2-methylpropane sulphonic acid in the salified form containing impurities is preferably carried out without a transfer agent. Therefore, the homopolymer (hereinafter called polymer) **P1** generally does not contain phosphorus, since typically the transfer agent is a compound comprising phosphorus such as sodium hypophosphite.

More specifically, the invention relates to a polymer composition comprising a water-soluble cationic copolymer (hereinafter called polymer) **P2** structured in micro-blocks. The copolymer **P2** is obtained by radical polymerization of at least one non-ionic monomer and at least one cationic monomer, in the presence of a homopolymer **P1** with a weight average molecular weight of between 5,000 and 100,000 daltons, said homopolymer **P1** having been prepared (prior to **P2**) from 2-acrylamido-2-methylpropane sulphonate in salified form and in the presence of 200 to 20,000 ppm by weight of 2-methyl-2-propenyl-sulphonic acid in salified form (the ppm being expressed relative to the weight of 2-acrylamido-2-methylpropane sulfonate in salified form).

The polymer composition comprising a water-soluble cationic copolymer **P2** may, in particular, be in the form of a solution (for example, an aqueous solution), an emulsion (for example, a water-in-oil emulsion), a solid composition (for example, a powder) or a suspension (for example, an aqueous suspension). The form of the polymer composition may depend on the polymerization technique used to form the polymer **P2**: gel polymerization; precipitation polymerization; emulsion polymerization (aqueous or reverse); suspension polymerization; reactive extrusion polymerization; water-in-water polymerization; and/or micellar polymerization.

The invention also relates to the use of the polymer composition comprising the cationic copolymer **P2** as a flocculant for wastewater treatment or as a dry strength agent in a papermaking process.

As used herein, the term "water-soluble polymer" refers to a polymer which yields an aqueous solution without insoluble particles when dissolved under stirring for 4 hours at 25 °C and with a concentration of 20 g.L$^{-1}$ in deionized water.

Value ranges include lower and upper bounds. Thus, the value ranges "between 0.1 and 1.0" and "from 0.1 to 1" include the values 0.1 and 1.0.

"A and/or B" means either A, or B, or A and B.

According to the present invention, the weight average molecular weight of the water-soluble polymers **P1** and **P2** is determined by measuring the intrinsic viscosity. The intrinsic viscosity may be measured by methods known to a person skilled in the art and may, in particular, be calculated from the values of reduced viscosity for different concentrations by a graphical method consisting in plotting the values of reduced viscosity (on the ordinate axis) based on the concentrations (on the abscissa axis) and by extrapolating the curve to a zero concentration. The intrinsic viscosity value is read on the ordinate axis or by using the least squares method. Next, the weight average molecular weight may be determined by the famous Mark-Houwink equation:

$$[\eta] = K\, M^{\alpha}$$

$[\eta]$ represents the intrinsic viscosity of the polymer determined by the solution viscosity measurement method,
K represents an empirical constant,
M represents the molecular weight of the polymer,
$\alpha$ represents the Mark-Houwink coefficient,
$\alpha$ and K depend on the particular polymer-solvent system. Tables known to a person skilled in the art give the values of $\alpha$ and K according to the polymer-solvent system.

The polymer **P1** has a weight average molecular weight of between 5,000 and 100,000 daltons, preferably between 5,000 and 80,000 daltons, and even more preferably between 10,000 and 50,0000 daltons.

The polymer **P2** preferably has a weight average molecular weight greater than 100,000 daltons and less than or equal to 40 million daltons, more preferably between 1 and 30 million daltons.

The polymer **P1** is obtained by a process of radical polymerization of 2-acrylamido-2-methylpropane sulfonic acid in salified form in aqueous solution known to a person skilled in the art.

The preferential Ritter process, which makes it possible to manufacture 2-acrylamido-2-methylpropane sulfonic acid, induces the formation of impurities such as 2-methyl-2-propenyl-sulfonic acid and 2-methylidene-1,3-propylenedisulfonic acid. Since the salified version of 2-acrylamido-2-methylpropane sulfonic acid, used for the polymerization of **P1,** generally comes from the Ritter process without any purification or comes from the purge of a purification, it contains significant quantities of the impurities previously described in salified form.

Preferably, 2-acrylamido-2-methylpropane sulphonic acid in salified form for the preparation of homopolymer **P1** contains between 300 and 10,000 ppm of 2-methyl-2-propenyl-sulphonic acid in salified form. Thus, the homopolymer **P1** is advantageously prepared in the presence of 300 to 10,000 ppm of 2-methyl-2-propenylsulfonic acid in salified form.

Preferably, independently or not, 2-acrylamido-2-methylpropane sulphonic acid in salified form for the preparation of the homopolymer **P1,** contains between 300 and 10,000 ppm by weight of 2-methylidene-1,3-propylenedisulphonic acid in salified form. Thus, the homopolymer **P1** is advantageously prepared in the presence of 300 to 10,000 ppm of 2-methylidene-1,3-propylenedisulfonic acid in salified form.

The salt form of 2-acrylamido-2-methylpropane sulfonic acid and the previously mentioned impurities is the same for these three salts. It is generally an alkali metal salt, chosen from sodium, lithium, potassium and/or an alkaline-earth salt chosen from magnesium, calcium and/or an ammonium salt.

Preferably, the salts of 2-acrylamido-2-methylpropanesulfonic and 2-methyl-2-propenylsulfonic acids, as well as the salt of 2-methylidene-1,3-propylenedisulfonic acid, if present, are sodium salts.

Polymer **P2** is a cationic copolymer obtained by radical polymerization of at least one nonionic monomer and at least one cationic monomer in the presence of polymer **P1**.

Preferably, the cationic monomer of the polymer **P2** is chosen from the group comprising quaternized or salified dimethylaminoethyl acrylate (ADAME), quaternized or salified dimethylaminoethyl methacrylate (MADAME), diallyldimethylammonium chloride (DADMAC), acrylamidopropyltrimethylammonium chloride (APTAC), methacrylamidopropyltrimethylammonium chloride (MAPTAC), and mixtures thereof.

Preferably, the nonionic monomer of the polymer **P2** is chosen from the group comprising acrylamide, methacrylamide, N-alkylacrylamides, N-alkylmethacrylamides, N,N-dialkylacrylamides, N,N-dialkylmethacrylamides, alkoxylated esters acrylic acid, alkoxylated esters of methacrylic acid, N-vinylpyridine, N-vinylpyrrolidone, hydroxyalkylacrylates, hydroxyalkylmethacrylates, N-vinylformamide, and mixtures thereof, the alkyl groups being linear and $C_1$-$C_3$. Preferably, the nonionic monomer is acrylamide and, therefore, the polymer **P2** is a cationic polyacrylamide.

In addition to non-ionic monomers and cationic monomers, monomers having a hydrophobic character may also be used in the preparation of the polymer **P2**. They are preferably chosen from the groups comprising esters of (meth) acrylic acid having an alkyl, arylalkyl, propoxylated, ethoxylated, and/or ethoxylated and propoxylated chain; (meth) acrylamide derivatives having an alkyl, arylalkyl propoxylated, ethoxylated, ethoxylated and propoxylated, and/or dialkyl chain; alkyl aryl sulphonates or mono- or disubstituted (meth)acrylamide amides having an alkyl, arylalkyl, propoxylated, ethoxylated, and/or ethoxylated and propoxylated chain; (meth)acrylamide derivatives having an alkyl, arylalkyl propoxylated, ethoxylated, ethoxylated and propoxylated, and/or dialkyl chain; alkyl aryl sulfonates and mixtures thereof. In this list, alkyl chains have at least two carbon atoms and usually at most 8 carbon atoms, and aryl alkyl or alkyl aryl chains have at least 7 carbon atoms and usually at most 15 carbon atoms.

Advantageously, the polymer **P2** is free from anionic monomer and/or zwitterionic monomer.

According to the invention, the polymer **P2,** beyond the block structure, may have a linear, branched, "star" (i.e., star-shaped), "comb" (i.e., comb-shaped), and/or dendritic structure. These structures may be obtained by selecting the initiator, the transfer agent, if it is present (case not preferred), the radical polymerization technique such as the controlled technique called Reversible Addition-Fragmentation chain-Transfer (RAFT), or the polymerization technique in the presence of nitroxides called Nitroxide Mediated Polymerization (NMP), or the Atom Transfer Radical Polymerization (ATRP) technique, the incorporation of structural monomers and the concentration.

According to the invention, the polymer **P2** is advantageously linear or structured. The term "structured polymer" is understood to mean a non-linear polymer which has sidechains so as to obtain, when this polymer is dissolved in water, a strong state of entanglement leading to very high low-gradient viscosities. However, the structured polymer according to the invention remains water-soluble.

The water-soluble polymer **P2** may also be structured:

- by at least one structural agent, which may be chosen from the group comprising polyethylenically unsaturated monomers (i.e., having at least two unsaturated functions), such as, for example, the vinyl, allylic, acrylic and epoxy functions; mention may be made, for example, of methylene bis acrylamide (MBA), triallylamine or tetraallylammonium chloride or 1,2 dihydroxyethylene bis-(N-acrylamide), and/or
- by macro-initiators such as polyperoxides, polyazos and polytransfer agents such as polymercaptans, and polyols, and/or
- by functionalized polysaccharides.

The amount of branching/crosslinking agent in the monomer mixture is advantageously less than 4% by weight, more advantageously less than 1%, and even more advantageously less than 0.5% relative to the total monomer content. According to one particular embodiment, it may be at least equal to 0.00001% by weight relative to the total monomer content.

In general, the polymer **P2** does not require the development of a particular polymerization process. Indeed, it may be obtained according to all the polymerization techniques well known to a person skilled in the art. It may, in particular, be polymerization in solution; gel polymerization; precipitation polymerization; emulsion polymerization (aqueous or reverse); suspension polymerization; reactive extrusion polymerization; water-in-water polymerization; and/or micellar polymerization.

Advantageously, the polymer **P2** is obtained by a gel or inverse emulsion polymerization process, known to a person skilled in the art. The polymer **P1** is added at the same time as the cationic and nonionic monomers and any other monomers at the start of the polymerization, generally before the addition of any initiator (azo compound, peroxide and/or redox systems).

In a preferred embodiment, the polymer **P2** is polymerized from 10 to 90 mol% of cationic monomers and from 10 to 90 mol% of nonionic monomers, preferably, advantageously in the absence of other monomers. Either way, the total of the monomers constitutes 100 mol% of monomers.

Advantageously, the ratio of the moles of cationic monomers in **P2** relative to the moles of 2-acrylamido-2-methylpropane sulfonate in salified form in **P1** is between 0.2 and 3, preferably between 0.5 and 2, preferably between 0, 6 and 1.5, even more preferably between 0.8 and 1.2.

The invention also relates to the use of the polymer composition comprising the cationic polymer **P2** as a flocculant for the treatment of waste water or as a dry strength agent in a papermaking process.

As regards the treatment of waste water, the polymer composition comprising the polymer **P2** may be used alone or in combination with at least one other water-soluble polymer. This other water-soluble polymer may be an inorganic or organic coagulant typically chosen from poly(diallyldimethylammonium chloride), polyamines, iron salts and aluminum salts, such as, for example, ferric chlorides and aluminum chlorides.

As regards the papermaking process, according to a preferred embodiment, the polymer composition comprising the polymer **P2** is advantageously introduced (i) into the white waters and/or (ii) the slurry and/or (iii) the mixture formed by the white water and the slurry after homogenization of the fibrous suspension in the fan pump.

Advantageously, the polymer composition comprising the polymer **P2** may also be introduced into the papermaking process at the forming table, for example by spraying or in the form of a foam, and/or at the size press.

Advantageously, between 0.1 and 10 $kg.t^{-1}$, and preferably between 0.2 and 5.0 $kg.t^{-1}$ of polymer **P2** are added to the fibrous suspension.

The fibrous suspension may include all usable cellulosic fibers as they are known to a person skilled in the art: virgin fibers, recycled fibers, chemical pulp, mechanical pulp, micro-fibrillated cellulose and/or nano-fibrillated cellulose. The fibrous suspension also includes the use of these different cellulosic fibers with all types of fillers such as $TiO_2$, $CaCO_3$ (crushed or precipitated), kaolin organic fillers and mixtures thereof.

The polymer composition comprising the polymer **P2** may be used within the papermaking process in combination with at least one other product chosen from inorganic or organic coagulants, dry strength agents, wet strength agents, natural polymers such as starches or carboxymethylcellulose (CMC), inorganic microparticles such as bentonite microparticles and colloidal silica microparticles organic polymers of any ionic nature (nonionic, cationic, anionic or amphoteric) and which may be (without being limiting) linear, branched, cross-linked, hydrophobic or associative, and mixtures thereof.

The following examples illustrate the invention without, however, limiting its scope.

## EXAMPLARY EMBODIMENTS OF THE INVENTION

### Example 1: Synthesis of polymers P1a, P1b and P1c.

In a 1-liter jacketed reactor, equipped with a condenser and a stirrer, 190g of deionized water are added to be heated to 80°C under a nitrogen atmosphere (nitrogen flow).

A sodium persulfate solution is prepared in a dropping funnel, by dissolving 17g of sodium persulfate in 100g of deionized water. Into a second dropping funnel are charged 690g of a sodium salt solution of 2-acrylamido-2-methylpropane sulfonic acid at 50% concentration by weight. A high-pressure liquid chromatography analysis indicates an amount of 1556 ppm of 2-methyl-2-propenyl-sulfonic acid in the form of sodium salt and 450 ppm of 2-methylidene-1,3-propylenedisulfonic acid in the form of salt sodium.

The sodium persulfate solution is added to the reactor over a period of 120 minutes, and the sodium salt solution of 2-acrylamido-2-methylpropane sulfonic acid is added concomitantly over a period of 90 minutes. During the addition of these reagents, and then again for 60 min (counted after addition of the sodium persulfate), the reaction medium is maintained at 80 °C. The polymer **P1a** according to the invention thus obtained has a weight average molecular weight equal to 47,000 daltons (determined from the intrinsic viscosity).

The synthesis of a **P1b** polymer is undertaken by carrying out the same protocol as previously with the only difference that the polymerization temperature is maintained at 100 °C. The polymer **P1b** according to the invention thus obtained has a weight average molecular weight equal to 24,600 daltons (determined from the intrinsic viscosity).

The synthesis of a polymer **P1c** is undertaken by carrying out the same protocol as previously (polymer **P1a)** with the only difference that the 2-methylpropane sulfonic acid contains an amount of 102 ppm of 2-methyl-2-propenyl-sulfonic acid as the sodium salt and 80 ppm of 2-methylidene-1,3-propylenedisulfonic acid as the sodium salt. The comparative polymer **P1c** thus obtained has a weight average molecular weight equal to 245,000 daltons (determined from the intrinsic viscosity).

All the **P1** polymers previously described are in the form of an aqueous solution with a concentration of 40% by weight of 2-methylpropane sulfonic acid homopolymer in the sodium salt form in water.

**Examples 2:** Synthesis of polymer compositions comprising the polymers **P2a** and **P2b** according to the invention and comparative polymers **P2c** and **P2d**

522 g of deionized water, 202 g of dimethylaminoethyl acrylate quaternized with methyl chloride (80% concentration by weight in water), 276 g of acrylamide (50% concentration by weight in water) and 405 g of polymer **P1a** (40% concentration by weight in water) are added in a 2000-mL beaker.

The solution thus obtained is cooled to between 5 and 10 °C then transferred to an adiabatic polymerization reactor. A nitrogen bubbling is then carried out for 30 minutes in order to eliminate all traces of dissolved oxygen.

Are then added to the reactor:

- 0.45 g of 2,2'-azobisisobutyronitrile,
- 1.5 mL of an aqueous solution at 2.5 g/L of 2,2'-Azobis[2-(2-imidazolin-2-yl)propane] dihydrochloride,
- 1.5 mL of a 1 g/L aqueous solution of sodium hypophosphite,
- 1.5 mL of a 1 g/L aqueous solution of tert-butyl hydroperoxide,
- 1.5 mL of an aqueous solution at 1 g/L of ammonium sulphate and iron (II) hexahydrate (Mohr's salt).

After a few minutes, the nitrogen bubbling is stopped. The polymerization reaction takes place for 4 hours to reach a temperature peak. At the end of this period, the polymer gel obtained is chopped then dried then ground again to obtain a polymer **P2a** according to the invention in the form of a powder with a weight average molecular weight equal to 8,230,600 daltons (determined from the intrinsic viscosity).

A polymer **P2b** is obtained by applying the same protocol with, instead of polymer **P1a**: polymer **P1b**. The polymer **P2b** according to the invention thus obtained in powder form has a weight average molecular weight equal to 8,320,500 daltons (determined from the intrinsic viscosity).

A polymer **P2c** is obtained by applying the same protocol with, instead of the **P1a** polymer: the **P1c** polymer. The comparative polymer **P2c** thus obtained in powder form has a weight average molecular weight equal to 8,400,500 daltons (determined from the intrinsic viscosity).

A polymer **P2d** is obtained by applying the same protocol but in the absence of polymer **P1**. The comparative polymer **P2d** thus obtained in powder form has a weight average molecular weight equal to 8,125,000 daltons (determined from the intrinsic viscosity).

**Example 3:** Application performance of polymer compositions comprising polymers **P2a** and **P2b** according to the invention, and comparative **P2c** and **P2d** in a papermaking process.

Retention aids are polymers added to cellulosic fiber slurries prior to paper formation in order to improve the efficiency with which fine particles, including cellulosic fines, are retained in the paper product.

*Type of paper pulp used*

Virgin fiber pulp:

The wet pulp is obtained by disintegrating the dry pulp to obtain a final aqueous concentration of 1% by weight. It is a neutral pH pulp composed of 90% bleached virgin long fiber, 10% bleached virgin short fiber and an additional 30% GCC (ground calcium carbonate) by weight based on fiber weight.

*Assessment of total retention and ash retention*

For all the following tests, the polymer solutions are prepared at 0.5% by weight. After 45 minutes of preparation, the polymer solutions are diluted 10 times before injection.

The various results are obtained using a Britt Jar type device with a stirring speed of 1000 rpm.

The process sequence is as follows:

- T=0 s: Stirring of 500 mL of paper pulp at a concentration of 0.5% by weight.
- T=10 s: Addition of the retention agent (300 g of dry polymer **P2** / ton of dry pulp).
- T=20 s: Sampling of the first 20 mL corresponding to the dead volume under the cloth, then recovery of 100 mL of white water.

The percentage of First Pass Retention (% FPR), corresponding to the total retention, is calculated according to the following formula: %FPR = (CHB-CWW)/CHB*100

where:

- CHB: Headbox consistency; and
- CWW: White water consistency.

The First Pass Ash Retention percentage (% FPAR), corresponding to the total retention, is calculated according to the following formula: %FPAR = (AHB-AWW)/AHB*100
where:

- AHB: Headbox ash consistency; and
- AWW: White water ash consistency.

For each of these analyses, the highest values correspond to the best performance.
The results are summarized in Table 1.

### Gravity drainage performance evaluation using the Canadian Standard Freeness (CSF)

In a beaker, the pulp is processed at a stirring speed of 1000 rpm.
The process sequence is as follows:

- T=0 s: Stirring of 500 mL of pulp at a concentration of 0.6% by weight.
- T=10 s: Addition of the retention agent (300 g of dry polymer **P2**/ton of dry pulp).
- T=20 s: Stirring stopped and addition of the amount of water necessary to obtain 1 liter.

This liter of pulp is transferred to the "Canadian Standard Freeness Tester" and the TAPPI T227om-99 procedure is applied.
The volume, expressed in mL, recovered by the side arm, gives a measure of the gravity drainage. The higher the value, the better the gravity drainage.
This performance may also be expressed by calculating the percent improvement over blank (% CSF).
Higher values correspond to better performance. The results in Table 1 show that the polymer compositions comprising the **P2** polymers according to the invention (**P2a** and **P2b)** make it possible to improve the drainage performance and the total retention compared to the comparative polymers **P2c** and **P2d.**

Table 1

| Polymer | %FPAR | %FPR | %CSF |
|---------|-------|------|------|
| **P2a** | 32.4 | 71.23 | 7.5 |
| **P2b** | 33.3 | 74.4 | 11.3 |
| **P2c** | 20.3 | 64.5 | 1.7 |
| **P2d** | 19.1 | 61.8 | 1.5 |

**Example 4:** Flocculation test of the polymer compositions comprising the polymers **P2a** and **P2b** according to the invention, and comparative **P2c** and **P2d**

The polymers are dissolved in tap water to obtain aqueous solutions with a concentration of 0.4% by weight of polymer relative to the total weight of the solution. The solutions are mechanically stirred at 500 rpm until complete solubilization of the polymers and obtaining clear and homogeneous solutions.
A series of flocculation tests are carried out on a mining effluent from a coal mine having a solids content of 17.4% by weight.
An amount of each solution, corresponding to a polymer dosage of 280g of polymer per ton of dry matter from the mining effluent, is added to 200g of mining effluent. Thorough mixing is done manually until optimal flocculation and water release are observed.
The result is expressed by Net Water Release (NWR) which corresponds to the total amount of water recovered 1 hour after the flocculation test, minus the amount of water unduly added during the incorporation of the aqueous polymer solution in the suspension. The same NWR is calculated after 24 hours, which gives a good indication of the maximum water release.

At the end of these 24 hours, the turbidity of the water supernatant thus released is also measured.

The results in Table 2 demonstrate that the polymer compositions comprising the polymers **P2a** and **P2b** according to the invention make it possible to improve the NWR and the turbidity of the supernatant (compared to the comparative polymers **P2c** and **P2d**).

Tableau 2

| Polymer | 1 hour NWR | 24 hour NWR | Turbidity (NTU) |
|---------|-----------|-------------|-----------------|
| **P2a** | 87 | 90 | 12 |
| **P2b** | 89 | 93 | 9 |
| **P2c** | 74 | 76 | 25 |
| **P2d** | 72 | 73 | 44 |

**Claims**

1.   A polymer composition comprising a water-soluble cationic copolymer **P2** structured in micro-blocks obtained by radical polymerization of at least one non-ionic monomer and at least one cationic monomer, in the presence of a homopolymer **P1** having an average molecular weight between 5,000 and 100,000 daltons, as determined by intrinsic viscosity as defined in the description,
wherein said homopolymer **P1** has been prepared from 2-acrylamido-2-methylpropane sulphonate in salified form and in the presence of 200 to 20,000 ppm by weight of 2-methyl-2-propenyl-sulphonic acid in salified form, the ppm being expressed relative to the weight of 2-acrylamido-2-methylpropane sulfonate in salified form and determined by the method disclosed in the description.

2.   The polymer composition according to claim 1, *characterized* **in that** the homopolymer **P1** is prepared in the presence of 300 to 10,000 ppm of 2-methyl-2-propenyl-sulfonic acid in salified form.

3.   The polymer composition according to one of claims 1 or 2, *characterized* **in that** the homopolymer **P1** is prepared in the presence of 300 to 10,000 ppm by weight of 2-methylidene-1,3-propylenedisulfonic acid in salified form.

4.   The polymer composition according to one of claims 1 to 3, *characterized* **in that** the salified forms of 2-acrylamido-2-methylpropane sulfonic acid, of 2-methyl-2-propenyl sulfonic acid, as well as, if present, the 2-methylidene-1,3-propylenedisulfonic acid salt, are sodium salts.

5.   The polymer composition according to one of claims 1 to 4, *characterized* **in that** the water-soluble cationic copolymer **P2** is water-soluble and has a weight average molecular weight greater than 100,000 daltons and less than or equal to 40 million daltons, as determined by intrinsic viscosity as defined in the description.

6.   The polymer composition according to one of claims 1 to 5, *characterized* **in that** the cationic monomer of the water-soluble cationic copolymer **P2** is chosen from the group comprising quaternized or salified dimethylaminoethyl acrylate (ADAME), quaternized or salified dimethylaminoethyl methacrylate (MADAME), diallyldimethylammonium chloride (DADMAC), acrylamidopropyltrimethylammonium chloride (APTAC), methacrylamidopropyltrimethylammonium chloride (MAPTAC), and mixtures thereof.

7.   The polymer composition according to one of claims 1 to 6, *characterized* **in that** the nonionic monomer of the water-soluble cationic copolymer **P2** is chosen from the group comprising acrylamide, methacrylamide, N-alkylacrylamides, N-alkylmethacrylamides, N,N-dialkylacrylamides, N,N-dialkylmethacrylamides, alkoxylated esters of acrylic acid, alkoxylated esters of methacrylic acid, N-vinylpyridine, N-vinylpyrrolidone, hydroxyalkylacrylates, hydroxyalkylmethacrylates, and mixtures thereof, the alkyl groups being linear and $C_1$-$C_3$.

8.   The polymer composition according to one of claims 1 to 7, *characterized* **in that** the cationic monomer represents 10 to 90 mol% of the water-soluble cationic copolymer **P2,** and **in that** the at least one nonionic monomer represents 10 to 90 mol% of the water-soluble cationic copolymer **P2.**

9.   The polymer composition according to one of claims 1 to 8, *characterized* **in that** the ratio of the moles of cationic monomers in the water-soluble cationic polymer **P2** relative to the moles of 2-acrylamido-2-methylpropane sulfonate in salified form in **P1** is between 0.2 and 3.

10. Use of a polymer composition according to one of claims 1 to 9 as a flocculant for the treatment of waste water or as a dry strength agent in a papermaking process.

**Patentansprüche**

1. Polymerzusammensetzung, die ein wasserlösliches kationisches Copolymer **P2,** welches in Mikroblöcke untergliedert ist, welche durch radikalische Polymerisation mindestens eines nichtionischen Monomers und mindestens eines kationischen Monomers erhalten wurden, in Gegenwart eines Homopolymers **P1** umfasst, welches ein durchschnittliches Molekulargewicht zwischen 5.000 und 100.000 Dalton aufweist, wobei dieses anhand der intrinsischen Viskosität gemäß der Begriffsbestimmung in der Beschreibung bestimmt wird,
wobei das Homopolymer **P1** ausgehend von 2-Acrylamido-2-methylpropansulfonat in versalzter Form und in Gegenwart von 200 bis 20.000 ppm nach Gewicht an 2-Methyl-2-propenylsulfonsäure in versalzter Form hergestellt wurde, wobei die ppm unter Bezugnahme auf das Gewicht des 2-Acrylamido-2-methylpropansulfonats in versalzter Form ausgedrückt sind und die Bestimmung gemäß der Methode erfolgt, welche in der Beschreibung offenbart ist.

2. Polymerzusammensetzung gemäß Anspruch *1, **dadurch gekennzeichnet, dass** das Homopolymer **P1** in Gegenwart von 300 bis 10.000 ppm an 2-Methyl-2-propenylsulfonsäure in versalzter Form hergestellt wird.

3. Polymerzusammensetzung gemäß einem der Ansprüche 1 oder 2, ***dadurch gekennzeichnet, dass*** das Homopolymer **P1** in Gegenwart von 300 bis 10.000 ppm an 2-Methyliden-1,3-propylendisulfonsäure in versalzter Form hergestellt wird.

4. Polymerzusammensetzung gemäß einem der Ansprüche 1 oder 3, ***dadurch gekennzeichnet, dass*** es sich bei den versalzten Formen von 2-Acrylamido-2-methylpropansulfonsäure, von 2-Methyl-2-propenylsulfonsäure sowie, falls vorhanden, bei dem 2-Methyliden-1,3-propylendisulfonsäuresalz um Natriumsalze handelt.

5. Polymerzusammensetzung gemäß einem der Ansprüche 1 bis 4, ***dadurch gekennzeichnet, dass*** das wasserlösliche kationische Copolymer **P2** wasserlöslich ist und ein Gewichtsmittel des Molekulargewichts von mehr als 100.000 Dalton und von höchstens 40 Millionen Dalton aufweist, wobei die Bestimmung anhand der intrinsischen Viskosität gemäß der Begriffsbestimmung in der Beschreibung erfolgt.

6. Polymerzusammensetzung gemäß einem der Ansprüche 1 bis 5, ***dadurch gekennzeichnet, dass*** das kationische Monomer des wasserlöslichen kationischen Copolymers **P2** aus der Gruppe ausgewählt ist, welche aus quaternisiertem oder versalztem Dimethylaminoethylacrylat (ADAME), quaternisiertem oder versalztem Dimethylaminoethylmethacrylat (MADAME), Diallyldimethylammoniumchlorid (DADMAC), Acrylamidopropyltrimethylammoniumchlorid (APTAC), Methacrylamidopropyltrimethylammoniumchlorid (MAPTAC) und deren Mischungen besteht.

7. Polymerzusammensetzung gemäß einem der Ansprüche 1 bis 6, ***dadurch gekennzeichnet, dass*** das nichtionische Monomer des wasserlöslichen kationischen Copolymers **P2** aus der Gruppe ausgewählt ist, welche Acrylamid, Methacrylamid, N-Alkylacrylamide, N-Alkylmethacrylamide, N,N-Dialkylacrylamide, N,N-Dialkylmethacrylamide, alkoxylierte Ester von Acrylsäure, alkoxylierte Ester von Methacrylsäure, N-Vinylpyridin, N-Vinylpyrrolidon, Hydroxyalkylacrylate, Hydroxyalkylmethacrylate und deren Mischungen umfasst, wobei die Alkylgruppen geradkettig und $C_1$-$C_3$ sind.

8. Polymerzusammensetzung gemäß einem der Ansprüche 1 bis 7, ***dadurch gekennzeichnet, dass*** das kationische Monomer 10 bis 90 mol-% des wasserlöslichen kationischen Copolymers **P2** ausmacht und dadurch, dass das mindestens eine nichtionische Monomer 10 bis 90 mol-% des wasserlöslichen kationischen Copolymers **P2** ausmacht.

9. Polymerzusammensetzung gemäß einem der Ansprüche 1 bis 8, ***dadurch gekennzeichnet, dass*** Verhältnis der Molmenge an kationischen Monomeren in dem wasserlöslichen kationischen Polymer **P2** zur Molmenge an 2-Acrylamido-2-methylpropansulfonat in versalzter Form in **P1** zwischen 0,2 und 3 beträgt.

10. Verwendung einer Polymerzusammensetzung gemäß einem der Ansprüche 1 bis 9 als Flockungsmittel zur Behandlung von Abwasser oder als Trockenfestigkeitsmittel in einem Papierherstellungsverfahren.

**Revendications**

1. Composition polymère comprenant un copolymère cationique hydrosoluble **P2** structuré en microblocs obtenus par polymérisation radicalaire d'au moins un monomère non ionique et d'au moins un monomère cationique, en présence d'un homopolymère **P1** présentant un poids moléculaire moyen compris entre 5 000 et 100 000 daltons, tel que déterminé par la viscosité intrinsèque telle que définie dans la description,
dans laquelle ledit homopolymère **P1** a été préparé à partir de sulfonate de 2-acrylamido-2-méthylpropane sous forme salifiée et en présence de 200 à 20 000 ppm en poids d'acide 2-méthyl-2-propényl-sulfonique sous forme salifiée, les ppm étant exprimées par rapport au poids du sulfonate de 2-acrylamido-2-méthylpropane sous forme salifiée et déterminées par le procédé décrit dans la description.

2. Composition polymère selon la revendication 1, *caractérisée en ce que* l'homopolymère **P1** est préparé en présence de 300 à 10 000 ppm d'acide 2-méthyl-2-propényl-sulfonique sous forme salifiée.

3. Composition polymère selon l'une des revendications 1 ou 2, *caractérisée en ce que* l'homopolymère **P1** est préparé en présence de 300 à 10 000 ppm en poids d'acide 2-méthylidène-1,3-propylènedisulfonique sous forme salifiée.

4. Composition polymère selon l'une des revendications 1 à 3, *caractérisée en ce que* les formes salifiées de l'acide 2-acrylamido-2-méthylpropane sulfonique, de l'acide 2-méthyl-2-propényl sulfonique, ainsi que, le cas échéant, du sel d'acide 2-méthylidène-1,3-propylènedisulfonique, sont des sels de sodium.

5. Composition polymère selon l'une des revendications 1 à 4, *caractérisée en ce que* le copolymère cationique hydrosoluble **P2** est hydrosoluble et présente un poids moléculaire moyen en poids supérieur à 100 000 daltons et inférieur ou égal à 40 millions de daltons, tel que déterminé par la viscosité intrinsèque telle que définie dans la description.

6. Composition polymère selon l'une des revendications 1 à 5, *caractérisée en ce que* le monomère cationique du copolymère cationique hydrosoluble **P2** est choisi dans le groupe comprenant l'acrylate de diméthylaminoéthyle (ADAME) quaternisé ou salifié, le méthacrylate de diméthylaminoéthyle (MADAME) quaternisé ou salifié, le chlorure de diallyldiméthylammonium (DADMAC), le chlorure d'acrylamidopropyltriméthylammonium (APTAC), le chlorure de méthacrylamidopropyltriméthylammonium (MAPTAC), et des mélanges de ceux-ci.

7. Composition polymère selon l'une des revendications 1 à 6, *caractérisée en ce que* le monomère non ionique du copolymère cationique hydrosoluble **P2** est choisi dans le groupe comprenant l'acrylamide, le méthacrylamide, les N-alkylacrylamides, les N-alkylméthacrylamides, les N, N-dialkylacrylamides, les N, N-dialkylméthacrylamides, les esters alkoxylés d'acide acrylique, les esters alkoxylés d'acide méthacrylique, la N-vinylpyridine, la N-vinylpyrrolidone, les hydroxyalkylacrylates, les hydroxyalkylméthacrylates, et des mélanges de ceux-ci, les groupes alkyles étant linéaires et en $C_1$-$C_3$.

8. Composition polymère selon l'une quelconque des revendications 1 à 7, *caractérisée en ce que* le monomère cationique représente de 10 à 90 % en mole du copolymère cationique hydrosoluble **P2,** et **en ce que** le au moins un monomère non ionique représente de 10 à 90 % en mole du copolymère cationique hydrosoluble **P2.**

9. Composition polymère selon l'une quelconque des revendications 1 à 8, *caractérisée en ce que* le rapport des moles de monomères cationiques dans le polymère cationique hydrosoluble **P2** par rapport aux moles de sulfonate de 2-acrylamido-2-méthylpropane sous forme salifiée dans **P1** est compris entre 0,2 et 3.

10. Utilisation d'une composition polymère selon l'une des revendications 1 à 9 en tant que floculant pour le traitement des eaux usées ou comme agent de résistance à sec dans un processus de fabrication de papier.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013138156 A1

- WO 2022053752 A1